Europäisches Patentamt

European Patent Office

Office européen des brevets

(19)

(11) Numéro de publication: **0 225 575**
**B1**

(12)

# FASCICULE DE BREVET EUROPEEN

(45) Date de publication du fascicule du brevet: **06.06.90**

(51) Int. Cl.⁵: **B 25 J 19/06**

(21) Numéro de dépôt: **86116666.8**

(22) Date de dépôt: **01.12.86**

(54) Dispositif de disjonction pour bras de robot.

(30) Priorité: **13.12.85 FR 8518549**

(43) Date de publication de la demande:
**16.06.87 Bulletin 87/25**

(45) Mention de la délivrance du brevet:
**06.06.90 Bulletin 90/23**

(84) Etats contractants désignés:
**BE CH DE ES GB IT LI NL SE**

(56) Documents cités:
**EP-A-0 140 036**
**DE-A-3 310 192**
**FR-A-2 474 927**
**US-A-3 893 217**
**US-A-4 540 331**

(73) Titulaire: **SYSPRO**
**91, avenue de la Libération**
**F-54000 Nancy (FR)**

(72) Inventeur: **Alvernhe, Gilles**
**23, rue Emile Gallé**
**F-54000 Nancy (FR)**
Inventeur: **Giudicelli, Patrice**
**1-3, rue Bourdan**
**F-75012 Paris (FR)**
Inventeur: **Jagielka, François**
**9, rue de Bonn**
**F-57320 Bouzonville (FR)**

(74) Mandataire: **Puit, Thierry et al**
**c/o Centre de Recherches de Pont-à-Mousson**
**B.P. 28**
**F-54700 Pont-à-Mousson (FR)**

Courier Press, Leamington Spa, England.

**Description**

La présente invention concerne un dispositif de disjonction ou disjoncteur que l'on interpose entre l'extrémité d'un bras de robot et un outil porté par ce bras.

On sait que, de plus en plus fréquemment, es outils qui effectuent un certain nombre de travaux sont fixés à l'extrémité de bras de robots qui eux-mêmes opèrent selon des programmes bien déterminés.

Or, il peut se faire que, ors de son travail, l'outil rencontre des conditions inhabituelles ou imprévues qui pourraient avoir pour conséquence, soit la réalisation d'un travail inacceptable, soit, plus généralement, une détérioration de l'outil ou du bras de robot, ce dernier étant un ensemble mécanique coûteux du fait de sa réalisation de haute précision. Il peut donc s'avérer utile que sur tout robot, lorsqu'il existe un risque particulier tant pour l'appareillage que pour le produit traité, on dispose entre le bras de robot et l'outil qu'il porte, un dispositif protecteur de disjonction ou disjoncteur.

On connaît par le document FR-A-2 474 927 un dispositif selon le préambule de la revendication 1 de la présente demande.

La présente invention la pour objet un dispositif de disjonction qui la pour fonction de couper la liaison mécanique entre l'outil et le bras du robot, lorsque des efforts anormaux, l'un radial et l'autre axial, s'exercent sur l'outil. Le dispositif de disjonction devra présenter une rigidité suffisante pour que sa présence entre l'outil et le bras du robot ne provoque pas de déflexion incontrôlée nuisant à la précision du travail de l'outil. De plus, le disjoncteur sera léger pour ne pas augmenter l'inertie du bras de robot au cours des mouvements rapides qu'il effectue ors d'une suite d'opérations. Enfin, l'adjonction de capteurs de mesure convenables dans le disjoncteur permet de fournir au robot et à l'utilisateur des informations importantes telles que l'intensité des efforts exercés sur l'outil dans une opération d'usinage ou le poids d'objets transportés dans une opération de manutention.

Dans la réalisation pratique du disjoncteur, es deux dispositifs sont combinés pour réduire son encombrement.

Enfin, chacun des dispositifs comporte un système de réarmement lui permettant après une disjonction, de retrouver sa position de travail primitive.

Les deux dispositifs constituant le disjoncteur peuvent être des dispositifs pneumatiques ou électromagnétiques. Dans le cas de dispositifs pneumatiques, les efforts radial et axial s'exerçant sur l'outil sont encaissés par des pistons, montés coulissants dans des boîtiers cylindriques fermés par des couvercles, sur lesquels s'exerce un effort antagoniste créé par la pression de fluides gazeux contenus dans les boîtiers. Il apparaît qu'en donnant des valeurs déterminées, mais qui peuvent être différentes suivant les travaux effectués, aux pressions des fluides gazeux contenus dans les boîtiers, on pourra régler le seuil de disjonction dans chacun des dispositifs donc le seuil d'efforts radial et axial admissible sur l'outil. Il sera bien évidemment possible de donner des valeurs différentes ou égales à la pression gazeuse régnant dans le boîtier de chacun des dispositifs.

Dans le cas de dispositifs électromagnétiques, les efforts radial et axial exercés sur l'outil sont contrebalancés par des forces électromagnétiques antagonistes, créées par des bobinages alimentés en courant électrique, qui plaquent les pistons contre les couvercles correspondants des boîtiers. En faisant varier l'intensité des courants d'alimentation des bobinages, on pourra régler le seuil de disjonction dans chacun des dispositifs.

Les caractéristiques et avantages de l'invention apparaîtront au cours de la description qui va suivre, faite en référence aux dessins annexés, donnés uniquement à titre d'exemple non limitatif et parmi lesquels:

la Fig. 1 est une vue schématique de principe d'un disjoncteur suivant l'invention;

la Fig. 2 est une vue en coupe, selon un plan diamétral, d'un premier mode de réalisation d'un disjoncteur;

la Fig. 3 est une vue schématique d'un second mode de réalisation d'un disjoncteur.

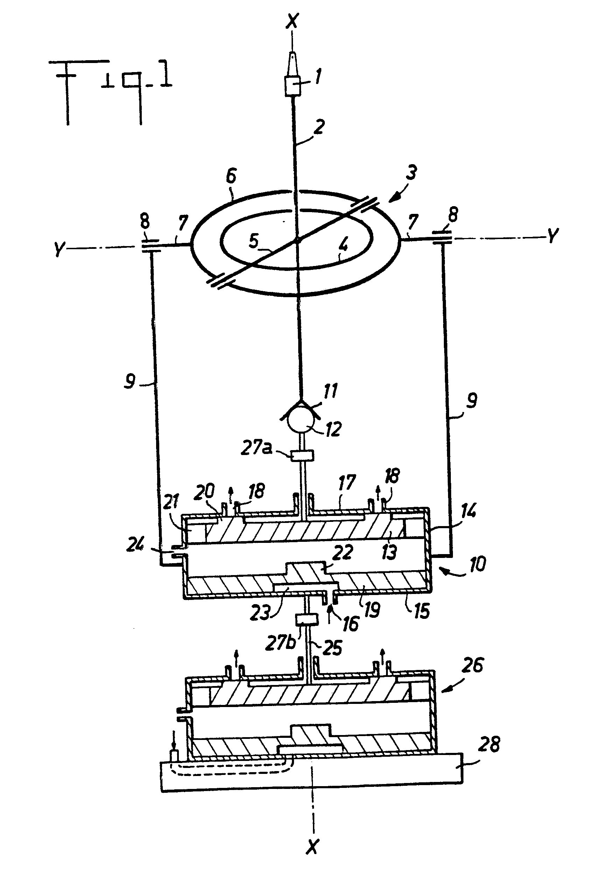

Sur la vue schématique de la Fig. 1, on la représenté un outil 1, fixé sur un porte-outil 2 solidaire d'un dispositif à cardan 3 constitué d'un premier anneau 4, d'axe X-X, muni d'un axe diamétral 5, orthogonal à l'axe X-X et au porte-outil 2, pouvant tourillonner dans un second anneau 6, concentrique au premier, muni de tourillons 7, diamétralement opposés, d'axe commun Y-Y perpendiculaire à l'axe 5. Les tourillons 7 sont portés par des paliers 8 reliés rigidement par des supports 9 à un premier dispositif pneumatique de disjonction 10. A l'extrémité du porte-outil 2, à l'opposé de l'outil 1, est fixé par son sommet un cône 11 de révolution, d'axe X-X, qui est en contact permanent avec une bille 12. L'ensemble cône 11-bille 12 la pour fonction de transformer tout effort radial s'exerçant sur le porteoutil 2 en un effort axial suivant l'axe X-X. La bille 12 est reliée rigidement à un piston 13 faisant partie du dispositif pneumatique 10. Un capteur d'effort 27a est interposé entre la bille 12 et le piston 13.

Le dispositif pneumatique 10 est composé d'un boîtier cylindrique 14 d'axe X-X, se terminant par un fond 15 percé d'un orifice 16, et fermé par un couvercle 17 muni de deux orifices 18. A l'intérieur du boîtier 14 sont disposés deux pistons 13 et 19 qui peuvent coulisser dans ce boîtier. Le piston 13 porte sur sa face dirigée vers le couvercle 17 une surépaisseur 20 annulaire. Quatre échancrures 21, diamétralement opposées deux à deux, sont ménagées à la périphérie de ce piston. La surépaisseur 20 la pour fonction d'obturer les orifices 18 lorsque le piston 13 est en contact avec le couvercle 17. La face supérieure du piston 19 porte dans sa zone centrale une surépaisseur 22. Une chambre 23, dans laquelle débouche l'orifice 16, est ménagée dans la face inférieure du piston 19. Enfin un orifice 24 est ménagé dans le boîtier 14 et débouche à l'intérieur de celui-ci entre es pistons 13 et 19. Les orifices 16 et 24 sont reliés à des sources de fluides gazeux sous pression (non représentées sur la figure) par des tubulures.

Le fond 15 du boîtier cylindrique 14 est solidaire, par une liaison rigide, par exemple une tige 25 d'axe X-X. d'un piston appartenant à un second dispositif pneumatique 26 en tout point analogue au dispositif 10 décrit précédemment. Les mêmes repères numériques désigneront donc les éléments constitutifs correspondants des dispositifs pneumatiques 10 et 26. Un capteur d'effort 27b est interposé entre le fond 15 du dispositif 10 et le piston 13 du dispositif 26.

Le fond 15 du dispositif 26 est fixé à une bride 28 constituant l'extrémité d'un bras de robot.

Enfin, les orifices 24 des dispositifs 10 et 26 sont reliés par des tubulures à des sources distinctes de fluides gazeux sous pression, la pression de chacune des sources étant maintenue à une valeur déterminée par un dispositif régulateur de pression. Il en résulte que, sous l'effet des pressions gazeuses régnant dans les dispositifs 10 et 26, les pistons 13 sont plaqués contre les couvercles 17 et les pistons 19 contre les fonds 15. Les pressions gazeuses dans les dispositifs 10 et 26 peuvent être égales ou différentes. On désignera par p1 la pression gazeuse régnant dans le dispositif 10 et par p2 celle régnant dans le dispositif 26.

Le fonctionnement du disjoncteur représenté de façon schématique à la Fig. 1 est décrit ci-après.

En position de travail, les pistons 13 et 19 sont plaqués respectivement contre les couvercles 17 et les fonds 15 de chacun des dispositifs 10 et 26. Dans le dispositif 10 règne une pression p1; le piston 13 est donc plaqué contre le couvercle 17 par une force f1 égale au produit de la pression p1 par la surface S1 du piston 13. Dans le dispositif 26 règne une pression p2; le piston 13 est donc plaqué contre le couvercle 17 par une force f2 égale au produit de la pression p2 par la surface S2 du piston 13.

Au cours du travail du robot, le porte-outil 2 est soumis de la part de l'outil 1 à un effort radial qui tend à l'écarter de l'axe X-X et à un effort axial qui tend à le repousser suivant l'axe X-X vers la bride 28 terminant le bras du robot.

Comme il a été mentionné plus haut, tout effort radial s'exerçant sur le porte-outil 3 est transformé en effort axial suivant l'axe X-X par l'ensemble cône 11-bille 12; cet effort axial est encaissé par le piston 13 du dispositif 10 qui exerce un effort antagoniste f1 = p1 x S1. Tant que l'effort radial exercé sur le porteoutil 2 provoque un effort axial inférieur ou égal à f1, il ne se passe rien et le porte-outil 2 est fermement solidaire du bras du robot.

Supposons maintenant que l'effort radial exercé sur le porteoutil 2 provoque un effort axial supérieur à f1. Le piston 13 du dispositif 10 est éloigné du couvercle 17 et le contact entre ce dernier et la surépaisseur 20 annulaire du piston 13 est rompu. Les orifices 18 du couvercle 17 ne sont alors plus obturés et le fluide gazeux sous pression contenu dans le dispositif 10 s'échappe par es échancrures périphériques 21 et les orifices 18 du couvercle. Le piston 13 s'efface alors complètement entraînant avec lui la bille 12 qui n'est plus en contact avec le cône 11, ce qui la pour effet de permettre au porte-outil 2 d'osciller librement grâce au dispositif à cardan 3. Il y a alors disjonction du porte-outil 2 d'avec le bras du robot.

Lorsque, en cours de travail, le porte-outil 2 est soumis à un effort axial suivant l'axe X-X, cet effort est transmis par les paliers 8 du système à cardan 3, par les liaisons rigides 9 et par le fond 15 du boîtier 14 du dispositif 10 au piston 13 du dispositif 26. Cet effort axial est encaissé par le piston 13 du dispositif 26 qui exerce un effort antagoniste f2 = p2 x S2. Tant que l'effort axial demeure inférieur ou égal à f2, il ne se passe rien et le porteoutil 2 reste fermement solidaire du bras du robot.

Si l'effort axial exercé sur le porte-outil 2 est supérieur à f2, le piston 13 du dispositif 26 est éloigné du couvercle correspondant 17, ce qui, comme décrit ci-avant, crée une fuite provoquant une chute de pression et l'effacement complet du piston 13. Le porteoutil 2 peut se déplacer librement suivant l'axe X-X. Il y a alors disjonction du porte-outil 2 d'avec le bras du robot.

Le réarmement, après disjonction, des dispositifs 10 et 26 s'effectue de la façon suivante. Un fluide gazeux sous pression est introduit par l'orifice 16 dans la chambre 23 du piston 19 qui repousse le piston 13 contre le couvercle 17, obturant ainsi les orifices 18. L'étanchéité piston-couvercle étant recréée, la pression gazeuse est à nouveau rétablie dans le boîtier 14 par le fluide gazeux sous pression admis par l'orifice 24 dans l'intervalle ménagé entre les pistons 13 et 19 par la surépaisseur 2. L'admission du fluide gazeux sous pression admis par l'orifice 16 est coupée et le piston de réarmement 19 est repoussé par la pression des fluides gazeux admis par l'orifice 24 contre le fond 15. Les dispositifs 10 et 26 sont alors réarmés.

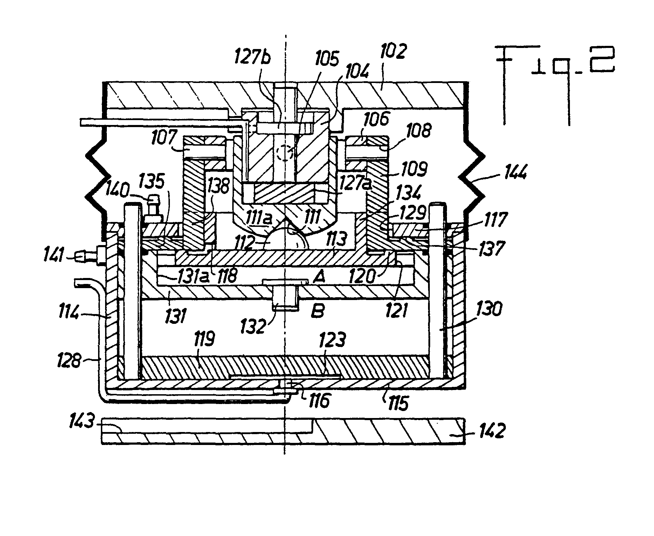

A la Fig. 2 est représenté, selon une vue en coupe par un plan diamétral, un premier mode de réalisation d'un disjoncteur dont le principe de fonctionnement est analogue à celui décrit ci-avant.

Le disjoncteur est constitué d'un boîtier 114 cylindrique, d'axe X-X, dont le fond 115 est percé d'une ouverture 116 d'axe X-X reliée à une tubulure 128. Ce boîtier est fermé par un couvercle 117 fixé par des vis. Une ouverture circulaire 129 d'axe X-X est ménagée dans ce couvercle qui est percé de quatre trous cylindriques diamétralement opposés deux à deux permettant le passage à travers le couvercle de quatre colonnes cylindriques 130.

A l'intérieur du boîtier 114 sont disposés, en allant du bas vers le haut sur la Fig. 2:

Un piston 119 de réarmement, d'axe X-X, reposant sur le fond 115 du boîtier 114 et pouvant coulisser dans ce dernier, muni de quatre colonnes cylindriques 130 diamétralement opposées deux à deux, perpendiculaires au piston 119, et de longueur telle qu'elles font saillie à l'extérieur du couvercle 117. Dans la face inférieure du piston 119, est ménagée une chambre 123 mise en relation avec une source de fluide gazeux sous pression par l'ouverture 116 et la tubulure 128.

Un piston 131, d'axe X-X, dans lequel est ménagée une cuvette 131a, et dans le fond de laquelle peut coulisser un piston 132 de réarmement, d'axe X-X, de plus petit diamètre. Le piston 131 est percé de quatre trous pour le passage des colonnes 130. A la périphérie de ce piston, sont ménagées quatre échancrures 133, diamétralement opposées deux à deux, non visibles sur la Fig. 2.

Un piston 113, d'axe X-X, dont le diamètre extérieur est légèrement inférieur au diamètre intérieur de la cuvette 131a du piston 131, afin de pouvoir coulisser dans celle-ci. Quatre échancrures 121, diamétralement opposées deux à deux, sont ménagées à la périphérie du piston 113. Sur la face supérieure de ce piston, sont ménagés une surépaisseur annulaire 120, une demi-sphère 112 d'axe X-X, et un collet 134 cylindrique d'axe X-X. Quatre trous 118 radiaux sont percés à la base du collet 134.

Un couvercle 135, d'axe X-X, qui obture la cuvette du piston 131, percé de quatre trous pour le passage des colonnes 130 et à la périphérie duquel sont ménagées quatre échancrures 136 diamétralement opposées deux à deux, non visibles sur le dessin. Les échancrures 136 sont en coïncidence avec les échancrures 133 du piston 131. Une surépaisseur annulaire 137 d'étanchéité, d'axe X-X, ainsi qu'un collet cylindrique coaxial sont ménagés sur la face supérieure du couvercle 135. Le collet 138 fait saillie vers l'extérieur du boîtier 114 par l'ouverture 129 du couvercle 117. Le diamètre intérieur du collet 138 est légèrement supérieur au diamètre extérieur du collet 134 du piston 113. Le collet 138 est prolongé vers l'extérieur du boîtier 114 par deux pattes 109, diamétralement opposées, dans les extrémités desquelles sont percés des trous 108, formant palier, d'axe Y-Y perpendiculaires à l'axe X-X.

A l'extérieur du boîtier 114 sont disposés:

Une platine porte-outil 102 solidaire d'une pièce 104, cylindrique, d'axe X-X, dans laquelle est ménagé un logement pour un capteur d'effort 127b, de type piézo-résistif, qui détecte les efforts axiaux s'exerçant sur la platine porte-outil 102. Un trou est ménagé dans la paroi du logement du capteur pour le passage du fil reliant le capteur à son décodeur de signal. La pièce 104 est munie de deux tourillons 105 diamétralement opposés, d'axe commun perpendiculaire aux axes X-X et Y-Y.

Un porte-cône 111a, creux, de forme cylindrique, d'axe X-X, dans lequel est logée sans jeu la pièce 104 et dans la paroi inférieure duquel, en forme de calotte sphérique, est ménagé un cône 111 d'axe X-X qui porte sur la demi-sphère 112 du piston 113. Deux échancrures 139 (non visibles sur la Fig. 2), diamétralement opposées, sont ménagées dans la paroi cylindrique du porte-cône 111a pour permettre le passage des tourillons 105 de la pièce 104. Le porte-cône 111a et la plaque porte-outil 102 sont solidaires l'un de l'autre par l'intermédiaire de la pièce 104.

Un capteur d'effort 127a, de type piézo-résistif, est interposé entre le fond du porte-cône 111a creux et la partie inférieure de la pièce 104. Il détecte les efforts radiaux s'exerçant sur la platine porte-outil 102. Un passage est ménagé entre la pièce 104 et le porte-cône 111a pour le passage du fil reliant le capteur à son décodeur de signal.

Un anneau 106, d'axe X-X, est disposé sans contact autour du porte-cône 111a, dans lequel sont ménagés deux trous diamétralement opposés dans lesquels viennent se loger les extrémités des tourillons 105 de la pièce 104. Cet anneau est lui-même muni de deux tourillons 107, d'axe Y-Y, qui peuvent pivoter dans es trous 108, formant palier, des pattes 109 du couvercle 135.

Les pièces 104, 105, 106, 107 constituent un dispositif à cardan 103.

Deux orifices 140 et 141, reliés chacun à une source de fluide gazeux sous pression, sont ménagés, le premier dans le couvercle 117, le second dans le boîtier 114. La pression de chacune des sources est maintenue à une valeur déterminée par un dispositif régulateur de pression.

L'orifice 140 alimente en fluide gazeux à la pression p1 la chambre A, constituée par la cuvette 131a du piston 131 fermée par le piston 113, la pression p1 régnant dans la chambre A, tandis que l'orifice 141 alimente la chambre B délimitée par le boîtier 114, le piston 119 et la face inférieure du piston 131, la pression p2 régnant dans la chambre B.

Le piston 113, le piston 131, dans la cuvette 131a duquel peut coulisser le piston 113, et le couvercle 135, constituent un premier dispositif 110, analogue au dispositif 10, tandis que le piston 131, le boîtier 114 et le couvercle 117 constituent un second dispositif 126 analogue au dispositif 26. On remarquera que le piston 131, commun aux dispositifs 110 et 126, joue le rôle de boîtier pour le piston 113 dans le premier dispositif 110 et celui d'un piston coulissant dans le boîtier 114 pour le second dispositif 126.

Le fond 115 du boîtier 114 porte une bride 142 permettant de fixer le disjoncteur à l'extrémité d'un bras de robot, dans laquelle, est ménagée une saignée 143 radiale permettant le passage de la tubulure 128.

Enfin, un soufflet souple 144 cache-poussière relie le boîtier 114 et la platine porte-outil 102.

Le fonctionnement du disjoncteur représenté à la Fig. 2 est analogue à celui du disjoncteur représenté schématiquement à la Fig. 1.

Le piston 113 est plaqué contre le couvercle 135 par une force f1 d'intensité $f1 = p1 \times S1$ ($S1 =$ surface du piston 113) tandis que le piston 131 est plaqué contre le même couvercle 135 par une force $f2 = p2 \times S2$ ($S2 =$ surface du piston 131).

Si un effort radial s'exerçant sur l'outil 1 et la platine porte-outil 102 provoque, par l'intermédiaire du couple cône 111 demi-sphère 112 un effort axial supérieur à f1, le piston 131 est repoussé et son contact avec le couvercle 135 rompu. Le fluide gazeux à la pression p1 contenu dans la chambre A peut alors s'échapper de celle-ci par es échancrures 121 et es trous 118. Du fait de cette fuite, le piston 113 s'efface et le contact cône 111-demi-sphère 112 est rompu. Le porte-cône 111a peut alors osciller librement autour des tourillons 105 et 107 et avec lui la platine porte-outil 102. Il y a alors disjonction de la platine porte-outil 2 d'avec le bras du robot.

Si un effort axial supérieur à f2 s'exerce sur la platine porte-outil 102, cet effort est transmis par la pièce 104, les tourillons 105, le porte-cône 111a, les tourillons 107 et les pattes 109 au couvercle 135 oui est repoussé ainsi que le piston 131, et son contact avec le couvercle 117 est rompu. Le fluide gazeux à la pression p2 contenu dans la chambre B peut alors s'échapper de celle-ci par les échancrures 133 du piston 131, les échancrures 136 du couvercle 135, qui sont en coïncidence avec les échancrures 133, et par le jeu ménagé entre le bord de l'ouverture 129 et le collet 138. Du fait de cette fuite, l'ensemble couvercle 135-piston 131 s'efface ainsi que la platine porte-outil 102. Il y a alors disjonction de la platine porte-outil d'avec le bras du robot.

Le réarmement, après disjonction, se fait de la façon suivante. Un fluide gazeux sous pression est envoyé par la tubulure 128 dans la chambre 123 du piston 119 qui repousse le piston 131 et le couvercle 135 jusqu'à ce que ce dernier, par sa surépaisseur annulaire 137, vienne au contact du couvercle 117. L'étanchéité de la chambre B est alors retrouvée et on peut rétablir la pression p2 dans cette chambre.

Lorsque le piston 119 de réarmement vient au contact du piston 131, il repousse le piston 132 qui lui-même repousse le piston 113 jusqu'à ce que ce dernier, par sa surépaisseur 120, vienne au au contact du couvercle 135, rétablissant ainsi l'étanchéité de la chambre A qui peut alors être remise à la pression p1.

Au cours du déplacement du piston 119 lors d'une manoeuvre de réarmement, les colonnes 130 se déplacent en même temps que lui et font de plus en plus saillie hors du boîtier 11. La fonction de ces colonnes est de redonner à la platine porte-outil 102 une position perpendiculaire à l'axe X-X, position qui est perdue lors d'une disjonction sous l'effet d'un effort radial excessif. La perpendicularité de la platine 102 et de l'axe X-X permet de faciliter le retour en contact du cône 111 et de la demi-sphère 112.

Il apparaît clairement que les chambres A et B peuvent être réarmées séparément ou simultanément.

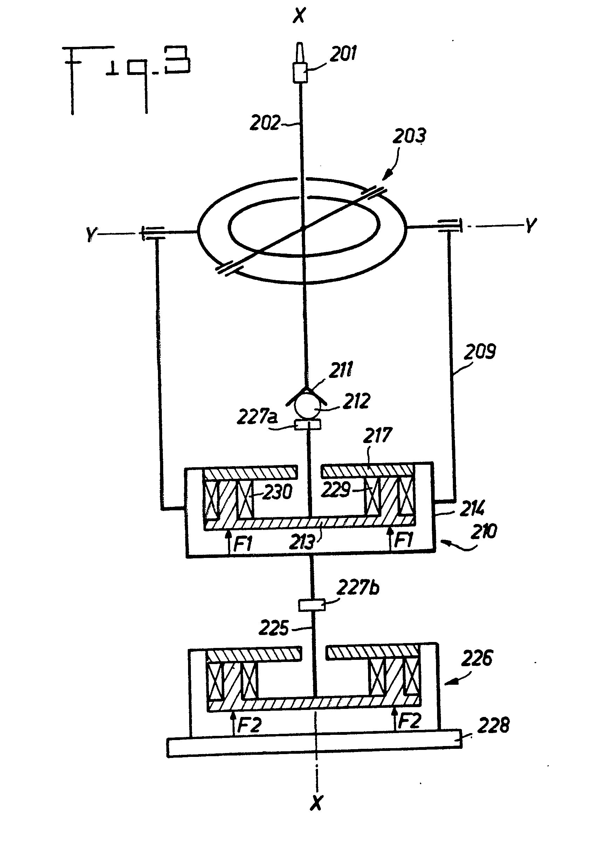

A la Fig. 3 est représenté schématiquement un second mode de réalisation d'un disjoncteur selon l'invention. Dans cette variante de réalisation, à la pression d'un fluide gazeux qui plaquait des pistons contre des couvercles de boîtiers, est substituée une force électromagnétique qui plaque des circuits ferromagnétiques contre les couvercles de boîtiers.

On retrouve dans ce mode de réalisation les mêmes éléments que ceux déjà décrits et représentés à la Fig. 1, à savoir:

un outil 201 fixé à l'extrémité d'une platine porte-outil 202 solidaire d'un système à cardan 203;

des liaisons rigides 209 reliant le système à cardan 203 au boîtier 214 d'un premier dispositif électromagnétique 210;

un ensemble cône 211-bille 212 disposé entre le porte-outil 202 et un piston 213;

un capteur d'effort 227a interposé entre l'ensemble cône 211 bille 212 et le piston 213;

une liaison rigide 225 reliant le boîtier 214 du premier dispositif électromagnétique 210 au piston d'un second dispositif électromagnétique 226 analogue au premier;

un capteur d'effort 227b interposé entre le boîtier du dispositif 210 et le piston du dispositif 226.

Dans ce mode de réalisation, les pistons 213 des dispositifs 210 et 226 sont réalisés en matériau ferromagnétique et ont la forme d'un plateau portant une collerette 229 cylindrique, coaxiale au plateau. Des bobinages 230, solidaires du couvercle 217, lui aussi en matériau ferromagnétique sont disposés de part et d'autre de la collerette 229. Lorsque les bobinages 230 sont alimentés en courant continu, les pistons 213 sont plaqués cortre les couvercles 217 par la force électromagnétique créée par les bobinages. En faisant varier l'intensité admise dans les bobinages, on pourra régler à des valeurs déterminées les forces d'appui des pistons 213 contre les couvercles 217.

Le fonctionnement de ce disjoncteur est le même dans son principe que celui du disjoncteur pneumatique déjà décrit.

Enfin, on peut envisager une autre variante dans laquelle le disjoncteur est constitué par un dispositif pneumatique associé à un dispositif électromagnétique.

Les avantages présentés par le disjoncteur, objet de l'invention, sont les suivants:

il est adaptable sur différents bras de robots par ses brides 28, 142, 228, dont la forme est adaptée à chaque type de bras;

les seuils de disjonction pour les efforts radial et axial sont réglables séparément;

la rigidité du disjoncteur est telle que son interposition entre un outil et un bras de robot ne provoque pas de déflexion parasite incontrôlée;

il indique, par ses capteurs d'effort, les contraintes tant radiale qu'axiale encaissées par l'outil;

il indique, toujours grâce aux capteurs, le poids des objets saisis par le robot, ce qui permet un contrôle de la régularité de la fabrication.

Le disjoncteur selon la présente invention est utilisable par exemple:

pour la manutention d'objets fragiles;
pour des opérations de meulage, d'ébarbage, d'ébavurage;
pour l'assemblage d'objets.

## Revendications

1. Dispositif de disjonction interposable entre l'extrémité d'un bras de robot et un outil, permettant la coupure, lorsqu'un effort radial ou axial supérieur à une valeur prédéterminée s'exerce sur l'outil, de la liaison mécanique rendant solidaire l'outil du bras, et comprenant un piston, pouvant coulisser dans un boîtier fermé par un couvercle, et des moyens de maintien en appui du piston contre ledit couvercle, le piston disjonctant sous l'effet de l'effort radial ou axial excessif, caractérisé en ce qu'il est composé de deux dispositifs (10, 110, 210) et (26, 126, 226), pouvant disjoncter indépendamment l'un de l'autre, constitués chacun par un piston (13, 113, 131, 213) pouvant coulisser dans un boîtier (14, 114, 131, 214) fermé par un couvercle (17, 117, 135, 217) et des moyens de maintien en appui du piston (13, 113, 131, 213) contre ledit couvercle (17, 117, 135, 217), le piston du premier dispositif (10, 110, 210), disjonctant sous l'effet d'un effort radial excessif, étant solidaire d'une platine (2, 102, 202) portant l'outil grâce à une liaison rigide comprenant une articulation, tandis que le piston du deuxième dispositif (26, 126, 226), disjonctant sous l'effet d'un effort axial excessif, est rendu solidaire de la platine (2, 102, 202) par fixation sur le boîtier (14, 214) ou sur le couvercle (135) du premier dispositif (10).

2. Dispositif de disjonction suivant la revendication 1 caractérisé en ce que la liaison rigide comprenant une articulation est constituée par un ensemble cône-bille (11, 111, 211—12, 112, 212) coopérant avec un dispositif à cardan (3, 103, 203) solidaire de la platine (2, 102, 202) portant l'outil.

3. Dispositif de disjonction suivant les revendications 1 et 2 caractérisé en ce que les moyens de maintien en appui du piston (13, 113, 131) contre le couvercle (17, 117, 135) sont constitués par la pression d'un fluide gazeux contenu dans le boîtier (14, 131, 114).

4. Dispositif de disjonction suivant les revendications 1 à 3 caractérisé en ce que les valeurs de la pression du fluide gazeux contenu dans les dispositifs (10, 110) et (26, 126) sont égales.

5. Dispositif de disjonction suivant les revendications 1 à 3 caractérisé en ce que les valeurs de la pression du fluide gazeux contenu dans les dispositifs (10, 110) et (26, 126) sont différentes.

6. Dispositif de disjonction suivant les revendications 1 à 5 caractérisé en ce que le dispositif (110), disjonctant sous l'effet d'un effort radial excessif, est constitué par un piston (113), monté coulissant dans un boîtier formé par une cuvette (131a) ménagée dans le piston (131) et fermé par le couvercle (135), tandis que le dispositif (126), disjonctant sous l'effet d'un effort axial excessif, est constitué par ledit piston (131) monté coulissant dans le boîtier (114) et fermé par le couvercle (117).

7. Dispositif de disjonction suivant la revendication 1 à 6 caractérisé en ce que, dans le fond du boîtier (14, 131, 114) de chaque dispositif (10, 110) et (26, 126), est disposé coulissant un piston de réarmement (19, 132, 119) actionné par un fluide gazeux sous pression.

8. Dispositif de disjonction suivant la revendication 7 caractérisé en ce que le piston de réarmement (119) du dispositif (126) est muni de quatre colonnes (130), perpendiculaires au piston (119), faisant saillie hors du boîtier (114).

9. Dispositif de disjonction suivant la revendication 8 caractérisé en ce que, lors d'une manoeuvre de réarmement, après une disjonction due à un effort radial excessif, les colonnes (130) du piston (119) viennent en contact avec la face inférieure de la platine (102) porte-outil pour lui faire retrouver sa position d'origine.

10. Dispositif de disjonction suivant les revendications 1 et 2 caractérisé en ce que les moyens de maintien en appui du piston (213) contre le couvercle (217) sont constitués par une force électromagnétique créée par des bobinages (230).

11. Dispositif de disjonction selon les revendications 1, 2 et 10 caractérisé en ce que les valeurs de la force électromagnétique s'exerçant dans les dispositifs (210) et (226) sont égales.

12. Dispositif de disjonction selon les revendications 1, 2 et 10 caractérisé en ce que les valeurs de la force électromagnétique s'exerçant dans les dispositifs (210) et (226) sont différentes.

13. Dispositif de disjonction selon les revendications 1, 2 et 10 caractérisé en ce que dans l'un des dispositifs le moyen de maintien en appui du piston est constitué par la pression d'un fluide gazeux tandis que dans l'autre dispositif le moyen de maintien en appui du piston est constitué par une force électromagnétique.

14. Dispositif de disjonction suivant l'une des revendications 1 à 13 caractérisé en ce que les dispositifs (10, 110, 210) et (26, 126, 226) sont munis de capteurs (27a, 27b, 127a, 127b, 227a, 227b) aptes à enregistrer les efforts radial et axial s'exerçant sur l'outil.

## Patentansprüche

1. Abschaltsicherung, welche zwischen dem Ende eines Roboterarms und einem Werkzeug angeordnet werden kann und die Trennung der mechanischen Verbindung, die das Werkzeug und den Arm zusammenhält, erlaubt, wenn eine radiale oder axiale Kraft, die einen vorbestimmten Wert übersteigt, auf das Werkzeug wirkt, und die einen Kolben aufweist der in einem mit einem Deckel verschlossenen Gehäuse gleiten kann, sowie Halteelemente zum Abstützen des Kolbene gegen den Deckel, wobei der Kolben unter der Wirkung der übermäßigen radialen oder axialen Kraft trennt, dadurch gekennzeichnet, daß sie aus zwei Vorrichtungen (10, 110, 210 und 26, 126, 226) zusammengestzt ist, welche unabhängig von einander trennen können, wobei jede aus einem Kolben (13, 113, 131, 213) besteht, der in einem durch einen Deckel (17, 117, 135, 217) verschlossenen Gehäuse (14, 114, 131, 214) gleiten kann, und aus Halteelementen zum Abstützen des Kolbens (13, 113, 131, 213) gegen den Deckel (17, 117, 135, 217), wobei der Kolben der ersten Vorrichtung (10, 110, 210) unter der Wirkung einer übermäßigen radialen Kraft trennt und mit einer Platte (2, 102, 202) verbunden ist, welche das Werkzeug dank einer festen Verbindung trägt, welche ein Gelenk aufweist, während der Kolben der zweiten Vorrichtung (26, 126, 226), welcher unter der Wirkung einer übermäßigen axialen Kraft trennt, mit einer Platte (2, 102, 202) verbunden ist, und zwar durch Befestigung am Gehäuse (14, 214) oder am Deckel (135) der ersten Vorrichtung (10).

2. Abschaltsicherung nach Anspruch 1, dadurch gekennzeichnet, daß die feste Verbindung, die ein Gelenk aufweist, aus einem Konus-Kugel-Komplex (11, 111, 211—212, 112, 212) besteht, welche mit einer kardanischen Vorrichtung (3, 103, 203) zusammenwirkt, die mit der das Werkzeug tragenden Platte (2, 102, 202) verbunden ist.

3. Abschaltsicherung nach den Ansprüchen 1 und 2, dadurch gekennziechnet, daß die Haltmittel, die den Kolben (13, 113, 131) gegen den Deckel (17, 117, 135) abstützen, durch den Druck eines gasförmigen Fluids gebildet werden, welches in dem Gehäuse (14, 131, 114) enthalten ist.

4. Abschaltsicherung nach den Ansprüchen 1 bis 3, dadurch gekennzeichnet, daß die Druckwerte des in den Vorrichtungen (10, 110 und 26, 126) enthaltenen gasförmigen Fluids gleich sind.

5. Abschaltsicherung nach den Ansprüchen 1 bis 3, dadurch gekennzeichnet, daß die Druckwerte des in den Vorrichtungen (10, 110 und 26, 126) enthaltenen gasförmigen Fluids verschieden sind.

6. Abschaltsicherung nach den Ansprüchen 1 bis 5, dadurch gekennzeichnet, daß die Vorrichtung (110), die unter der Wirkung einer übermäßigen radialen Kraft trennt, durch einen Kolben (113) gebildet ist, der in einem Gehäuse gleitend monitiert ist, das von einer in dem Kolben (131) angeordneten Buchse (131a) gebildet und von dem Deckel, (135) verschlossen ist, während die Vorrichtung (126), die unter der Wirkung einer übermäßigen axialen Kraft trennt, aus dem Kolben (131) besteht, der gleitend in dem Gehäuse (114) angeordnet ist und von dem Deckel (117) verschlossen ist.

7. Abschaltsicherung nach den Ansprüchen 1 bis 6, dadurch gekennzeichnet, daß am Boden des Gehäuses (14, 131, 114) jeder Vorrichtung (10, 110 und 26, 126) gleitend ein Aufrüstkolben (19, 132, 119) angeordnet ist, der von einem druckbeaufschlagten gasförmigen Fluid betätigt wird.

8. Abschaltisicherung nach Anspruch 7, dadurch gekennzeichnet, daß der Aufrüstkolben (119) der Vorrichtung (126) mit vier Säulen (130) versehen ist, die senkreckt zum Kolben (119) angeordnet sind und aus Gehäuse (114) vorspringen.

9. Abschaltsicherung nach Anspruch 8, dadurch gekennzeichnet, daß bei einem Aufrüstmanöver nach einer Trennung aufgrund einer übermäßigen radialen Kraft die Säulen (130) des Kolbens (119) in Kontakt mit der Innenfläche der werkzeugtragenden Platte (102) kommen, um sie in ihre Ursprungslage zurückzubringen.

10. Abschaltsicherung nach den Ansprüchen 1 und 2, dadurch gekennzeichnet, daß die Haltemittel, die den Kolben (213) gegen den Deckel (217) abstützen, durch eine elektromagnetische Kraft erzeugt werden, die durch die Wicklungen (230) erzeugt wird.

11. Abschaltsicherung nach den Ansprüchen 1, 2, und 10, dadurch gekennzeichnet, daß die Werte der elektromagnetischen Kraft, die in den Vorrichtungen (210 und 226) wirken, gleich sind.

12. Abschaltsicherung nach den Ansprüchen 1, 2 und 10, dadurch gekennzeichnet, daß die Werte der elektromagnetischen Kraft, die in den Vorrichtungen (210 und 226) wirken, verschieden sind.

13. Abschaltsicherung nach den Ansprüchen 1, 2 und 10, dadurch gekennzeichnet, daß in einer der Vorrichtungen des Mittel zum Halten des Kolbens durch den Druck eines gasförmigen Fluids gebildet ist, während in der anderen Vorrichtung das Mittel zum Halten des Kolbens durch eine elektromagnetische Kraft gebildet ist.

14. Abschaltsicherung nach einem der Ansprüche 1 bis 13, dadurch gekennzeichnet, daß die Vorrichtungen (10, 110, 210) und (26, 126, 226) mit Meßfühlern (27a, 27b, 127a, 127b, 227a, 227b) versehen sind, die geeignet sind, die auf das Werkzeug wirkenden radialen axialen Kräfte zu registrieren.

**Claims**

1. Disconnection device which can be interposed between the end of a robot arm and a tool, facilitating the interruption, when a radial or axial force greater than a predetermined value is exerted on the tool, of the mechanical connection connecting the tool to the arm, and comprising a piston, which is able to slide in a casing closed by a cover, and means for keeping the piston in abutment with said cover, the piston disconnecting under the effect of the excessive radial or axial force, characterised in that it is composed of two devices (10, 110, 210) and (26, 126, 226) able to be disconnected independently of each other, each constituted by a piston (13, 113, 131, 213) able to slide in a casing (14, 114, 131, 214) closed by a cover (17, 117, 135, 217) and means for keeping the piston (13, 113, 131, 213) in abutment against said cover (17, 117, 135, 217), the piston of the first device (10, 110, 210) disconnecting under the effect of an excessive radial force, being integral with a plate (2, 102, 202) supporting the tool by way of a rigid connection comprising a joint, whereas the piston of the second device (26, 126, 226), disconnecting under the effect of an excessive axial force, is rendered integral with the plate (2, 102, 202) by attachment to the casing (14, 214) or to the cover (135) of the first device (10).

2. Disconnection device according to Claim 1, characterised in that the rigid connection comprising a joint is constituted by a cone-ball assembly (11, 111, 211—12, 112, 212) co-operating with a universal joint device (3, 103, 203) integral with the plate (2, 102, 202) supporting the tool.

3. Disconnection device according to Claims 1 and 2, characterised in that the means for keeping the piston (13, 113, 131) in abutment against the cover (17, 117, 135) are constituted by the pressure of a gaseous fluid contained in the casing (14, 131, 114).

4. Disconnection device according to Claims 1 to 3, characterised in that the values of the pressure of the gaseous fluid contained in the devices (10, 110) and (26, 126) are equal.

5. Disconnection device according to Claims 1 to 3, characterised in that the values of the pressure of the gaseous fluid contained in the devices (10, 110) and (26, 126) are different.

6. Disconnection device according to Claims 1 to 5, characterised in that the device (110), disconnecting under the effect of an excessive radial force, is constituted by a piston (113), mounted to slide in a casing formed by a tray (131a) provided in the piston (131) and closed by the cover (135), whereas the device (126), disconnecting under the effect of an excessive axial force, is constituted by the said piston (131) mounted to slide in the casing (114) and closed by the cover (117).

7. Disconnection device according to Claims 1 to 6, characterised in that, arranged to slide in the bottom of the casing (14, 131, 114) of each device (10, 110) and (26, 126) is a resetting piston (19, 132, 119) actuated by a pressurised gaseous fluid.

8. Disconnecting device according to Claim 7, characterised in that the resetting piston (119) of the device (126) is provided with four posts (130), perpendicular to the piston (119), projecting from the casing (114).

9. Disconnection device according to Claim 8, characterised in that, at the time of a resetting operation, after a disconnection due to an excessive radial force, the posts (130) of the piston (119) come into contact with the lower face of the tool-support plate (102) in order to return it to its original position.

10. Disconnection device according to Claims 1 and 2, characterised in that the means for keeping the piston (213) in abutment against the cover (217) are constituted by an electromagnetic force created by windings (230).

11. Disconnection device according to Claims 1, 2 and 10, characterised in that the values of the electromagnetic force exerted in the devices (210) and (226) are equal.

12. Disconnection device according to Claims 1, 2 and 10, characterised in that the values of the electromagnetic force exerted in the devices (210) and (226) are different.

13. Disconnection device according to Claims 1, 2 and 10, characterised in that in one of the devices, the means for keeping the piston in abutment are constituted by the pressure of a gaseous fluid, whereas in the other device, the means for keeping the piston in abutment are constituted by an electromagnetic force.

14. Disconnection device according to one of Claims 1 to 13, characterised in that the devices (10, 110, 210) and (26, 126, 226) are provided with sensors (27a, 27b, 127a, 127b, 227a, 227b) able to record the radial and axial forces exerted on the tool.

Fig.1

EP 0 225 575 B1

Fig.2

Fig.3